# EUROPEAN PATENT APPLICATION

(11) **EP 2 450 898 A1**
(43) Date of publication of application: **09.05.2012**
(21) Application number: 10190277.3
(22) Date of filing: 05.11.2010
(51) Int. Cl.: G11B 27/034, G11B 27/10, G11B 27/28, G06F 17/30

(54) **Mixed video compilation**

(71) Applicant: Research in Motion Limited, Waterloo, Ontario N2L 3W8 (CA)
(72) Inventor: Hymel, James Allen, Waterloo, Ontario N2L 5Z5 (CA); Kupfer, Sandra Marcela, Waterloo, Ontario N2L 3L3 (CA)
(74) Representative: Roberts, Gwilym Vaughan

(57) **Abstract**

A method is provided for creating a video compilation. The method comprises a selection component selecting from a plurality of videos at least two videos that share at least one common selection parameter, and a mashing component interspersing scenes from the at least two videos.

## Description

Video mashing is a process whereby video recordings from multiple sources are combined to create a new video presentation. Typically, scenes are cut from multiple videos and then interspersed with one another to produce a video compilation that has novel or artistic effects. The resulting compilation can be referred to as a mashup, and a person or group of people that creates a mashup can be referred to as a mashup artist. Numerous video/audio editing platforms exist to assist a mashup artist in cutting scenes from existing video recordings and splicing the scenes together into a mashup. Such tools typically require the mashup artist to select the videos that are to be used in the mashup and then to directly control how scenes from the selected videos are to be spliced together.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates an automated video mashup system, according to an implementation of the disclosure.

Figure 2 is a flowchart for a method for creating a video compilation, according to an implementation of the disclosure.

Figure 3 illustrates a processor and related components suitable for implementing the present disclosure.

### DETAILED DESCRIPTION

It should be understood at the outset that although illustrative examples of one or more implementations of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Implementations of the present disclosure provide novel systems and methods for creating video mashups. Video recordings can be automatically selected based on at least one parameter that is common to all of them. In some cases, the common parameter is the soundtrack for the videos, but in other cases the videos could have other or additional parameters in common. The selected videos are then combined into a mashup by an algorithm that may be totally automated or that may allow some degree of input from a mashup artist. The automation of the mashup might be based on the parameters that were used for the selection of the videos and/or on mashup parameters that are specified by the mashup artist after the selection of the videos and/or on other parameters. The mashup artist may also include videos in the mashup that were not among the originally selected videos.

Several examples may illustrate how the disclosed systems and methods might be implemented. In one example, a mashup artist might wish to create a mashup based on a live concert. The mashup artist might gather videos for potential use in the mashup in several different ways. In some cases, the mashup artist may plan to attend the concert along with several friends or colleagues and may request that each of the attendees record videos of the concert from different locations within the concert venue. In other cases, the mashup artist may attend the concert alone and use multiple video recording devices stationed at multiple locations within the concert venue to obtain multiple videos of the event. In still other cases, the mashup artist may attend the concert alone and record a single video of the event. The mashup artist might then obtain other videos of the same concert from the internet or from other sources. In yet other cases, the mashup artist might not attend the concert at all but instead might obtain multiple videos of the concert from the internet or from other sources.

If the mashup artist obtains multiple videos of the concert individually or with the assistance of other videographers, the mashup artist would know that those videos are all related to one another and can therefore be used to create a mashup video of the concert. Such videos will be referred to herein as original videos. If the mashup artist wishes to mash one or more original videos with one or more non-original videos from other sources, the mashup artist might specify one or more selection parameters that are to be associated with the original videos and that can be used as the basis for selecting other videos that could potentially be mashed with the original videos. A selection parameter might be metadata that is already associated with an original video, such as a geotagged time or location, a cell identifier, a WiFi access point identifier, or other information that is automatically associated with a video at or near the time it is recorded. Additionally or alternatively, a mashup artist might assign a selection parameter to an original video after the video has been recorded. For example, the mashup artist might specify that the soundtrack of the recording is a parameter that should later be used to find other videos that might be mashed with an original video.

Instead of or in addition to original videos, the mashup artist may wish to obtain videos of the concert from one or more other sources such as a video archive web site or a similar public forum or video repository. Videos that are available to the mashup artist but that were not recorded by the mashup artist or by someone associated with the mashup artist will be referred to herein as public videos. A video repository might have a large number of public videos that might potentially have been recorded at the concert in question. However, the mashup artist may not be able to easily determine which of the available public videos were in fact recorded at the concert.

In an implementation, various selection parameters can be associated with public videos. Selection parameters could be metadata already associated with the public videos or parameters assigned to the public videos by the mashup artist. That is, as with the selection parameters for original videos, the selection parameters for public videos might include the soundtracks of the videos, and/or metadata such as a geotagged time or location, a cell identifier, or a WiFi access point identifier.

If a match is found between one or more selection parameter values associated with different videos, the videos can be considered to have been recorded at the same event. For example, if the time and location of an original concert video are approximately the same as the time and location of a public video, the original and public videos can be considered to have been recorded at the same concert. The mashup artist might then choose to use two or more videos that have been matched in this manner in creating a mashup.

The determination of whether there is a match between the selection parameters of different videos can be made entirely manually by the mashup artist, entirely automatically by a selection algorithm, or partially by the mashup artist and partially by the selection algorithm. For example, a plurality of videos each having a plurality of selection parameters might be made available to the selection algorithm. The mashup artist might have previously selected the videos from a public forum with the view that there is potentially some commonality between them. The group of potentially relevant videos might also include one or more original videos. The selection algorithm might then ask a series of yes/no questions, each regarding whether a particular selection parameter should be taken into consideration in determining whether two or more of the videos are associated with the same event. The selection algorithm might then compare the values of the chosen selection parameters to find if there are matches between the selection parameters. If matches are found between a sufficient number of parameters for two or more videos, it can be assumed that those videos were recorded at the same concert.

As an example, the selection algorithm might ask whether the geotagged date, time, and location of several videos should be used as selection parameters for the videos. If the mashup artist answers 'yes' to all of these parameters, the selection algorithm will find all videos in the group of previously selected videos for which all three of these parameters are the same. The selection algorithm might perform such an evaluation only for public videos or might compare one or more public videos to one or more original videos.

The selection parameters could be applied in a particular order so that a large number of public videos that might potentially be relevant are progressively narrowed down to the ones that are most relevant. For example, the geotagged date could be used first to find public videos that were recorded on the same date. Next the geotagged location could be used to find, among the public videos that were recorded on the same date, the public videos that were also recorded at the same time. Then the soundtracks of the public videos that were recorded at the same place and time could be compared to confirm that those public videos were in fact recorded at the same concert.

In some cases, selection parameters associated with one or more original videos might be compared with selection parameters associated with one or more public videos in order to find public videos that match the original videos. In other cases, selection parameters associated with a plurality of public videos might first be compared to one another in order to narrow down the number of public videos that are relevant. Selection parameters associated with the resulting smaller set of public videos might then be compared with selection parameters associated with one or more original videos to find public videos that match the original videos. In still other cases, only public videos might be evaluated to find videos with selection parameter values desired by the mashup artist.

As mentioned above, the soundtracks of multiple original and/or public videos could be used as a parameter for determining if the videos were recorded at the same event. That is, continuing the example of videos recorded at a concert, all videos recorded at the concert will have strong similarities in their soundtracks even if they were recorded in disparate locations within the concert venue and were started and stopped at different times. These similarities can be a valuable factor in establishing that different videos were recorded at the same concert, since the sounds that occur at an event are typically unique to that event and soundtracks recorded at different events would be highly unlikely to be similar. Soundtrack characteristics that could be used to determine if two or more soundtracks were recorded at the same concert might include the duration of a song, the occurrence of the same notes at the same time in different soundtracks, a comparison of the actual waveforms of different soundtracks, or other characteristics.

In some cases, video scenes that were not recorded at the concert could be included in the mashup video of the concert. For example, the mashup artist might wish to enhance the artistic effect of the mashup by including scenes that the mashup artist recorded at another place and time. Alternatively or additionally, the mashup artist might wish to include scenes from publicly available videos that have no direct relationship to the original or public concert videos. Such videos can be referred to as alternative videos and could be selected by the mashup artist at any point in the mashup creation process.

Once the mashup artist has manually or with the assistance of a selection algorithm selected the concert videos to be mashed and has selected any alternative videos to be included in the mashup, the mashup artist might specify one or more mashing parameters that are to be associated with the selected videos. The mashing parameters may be the same as or in addition to the selection parameters and might be used by a mashing algorithm in determining how the selected videos are to be mashed. For example, the mashing parameters might be used to specify when a switch should be made from a scene in a first video to a scene in a second video.

Scenes from any selected original videos and/or any selected public videos and/or any alternative videos can then be spliced together based on the mashing parameters. Similar to the procedure with the selection algorithm, the splicing of the videos could be done entirely manually by the mashup artist, entirely automatically by a mashing algorithm, or partially by the mashup artist and partially by the mashing algorithm. For example, the mashing algorithm might ask the mashup artist a series of yes/no questions to determine which mashing parameters should be considered in the creation of the mashup. The mashing algorithm might also ask more subjective questions regarding how the mashing parameters should be applied and the values that should be used for the parameters. The mashup artist could select the mashup parameters and parameter values in an attempt to create a mashup that turns out in a certain preconceived form. Alternatively, the mashing algorithm could splice scenes together with minimal input from the mashup artist. The mashup artist might then view the resulting mashup and could decide to keep it or could reject it and instruct the algorithm to automatically create another mashup, ag ain with minimal input from the mashup artist. The mashup artist might continue this trial and error process until a satisfactory mashup is created. As described below, in any of these cases, the soundtracks of the videos could be used to ensure that scenes from different videos are combined in the proper sequence.

In an implementation, the mashing algorithm can recognize still images in the selected videos that may not be pertinent to the live performance of the concert. For example, if a poster of a singer's face is displayed at one of the singer's concerts, it may be preferable that only scenes showing the actual singer, but not scenes showing the picture of the singer, be included in the mashup. The mashing algorithm might be able to automatically exclude scenes that include such still images from the final mashup.

The mashing algorithm can use the mashing parameters in numerous different ways to automatically splice together scenes from different videos. In one implementation, the splicing is based on the soundtracks that the mashed videos have in common. For example, when a slow part of the music occurs, the mashup could switch to a scene from a video that was taken close to the stage, and when a fast part of the music occurs, the mashup could switch to a scene from a video that was taken far from the stage. As other examples, the scenes in the mashup could change when the loudness of the music changes by a pre-specified amount, when there is a key change in the music, when there is a break between songs, when a different singer begins singing, when an instrumental solo occurs, or when other notable events occur in the soundtrack. The events that are to be used to trigger a scene change and the frequency at which such changes are to occur might be mashing parameters that are specified by the mashup artist.

In an implementation, the videos can be synchronized based on the soundtrack that they have in common. That is, when the soundtrack is used as a selection parameter, the selected videos will all have essentially the same soundtrack, although there might be some slight differences in the soundtracks due to differences in the recording quality, the recording location, and other factors. The common soundtrack can be used to synchronize the video portions of the various recordings so that scenes from different videos occur in the proper sequence in the mashup. That is, scenes from different videos are not spliced together at random but are interspersed with one another in such a manner that a scene from a first video ends and a scene from a second video begins at the same point in a single soundtrack. The soundtrack that has the highest audio quality or that has some other desired effect might be selected as the soundtrack that will be used for the mashup. The selection of the soundtrack for the mashup might be made by the mashup artist based on a subjective judgment or might be made automatically by the mashing algorithm.

In the above example of multiple videos recorded at a concert, a match between the soundtrack portions of the recordings could be an important factor in confirming that recordings made at approximately the same place and time were in fact recordings of the same event. However, a determination that videos obtained from different sources were made at the same event between does not necessarily need to be based on their soundtracks. Two people recording videos of the same event could capture different soundtracks on their recordings, but other factors could be used to establish that the recordings were made at the same event.

An example where multiple videos are recorded at a sporting event will be used to illustrate such a case. A mashup artist might make a video recording of a football game from a seat in an upper deck of a stadium and might wish to create a mashup video of the game that includes other videos recorded at other locations in the stadium. The soundtrack captured by the mashup artist might have very little in common with soundtracks captured in lower level seats, on the sidelines, near a band, or in other locations. Therefore, the soundtrack recorded by the mashup artist might not be an appropriate selection parameter to use in finding other videos recorded at the game. However, other videos could be found in other ways. For example, the mashup artist might search a public forum for videos that have metadata indicating that the videos might have been recorded at the approximate time and location of the mashup artist's recording of the football game. Alternatively, the mashup artist need not have made a recording of the game at all. The mashup artist could simply search for videos in a public forum to find recordings that might be related to the game. The mashup artist might then provide a group of potentially relevant videos to the selection algorithm and instruct the selection algorithm to narrow the group down to a smaller group with a higher likelihood of relevance. The mashup artist could then view the videos to confirm that they are recordings of the game of interest. Once the mashup artist has obtained multiple videos of the game in this manner, the mashing procedures described above in the context of the concert videos could be used to create a mashup video of the football game.

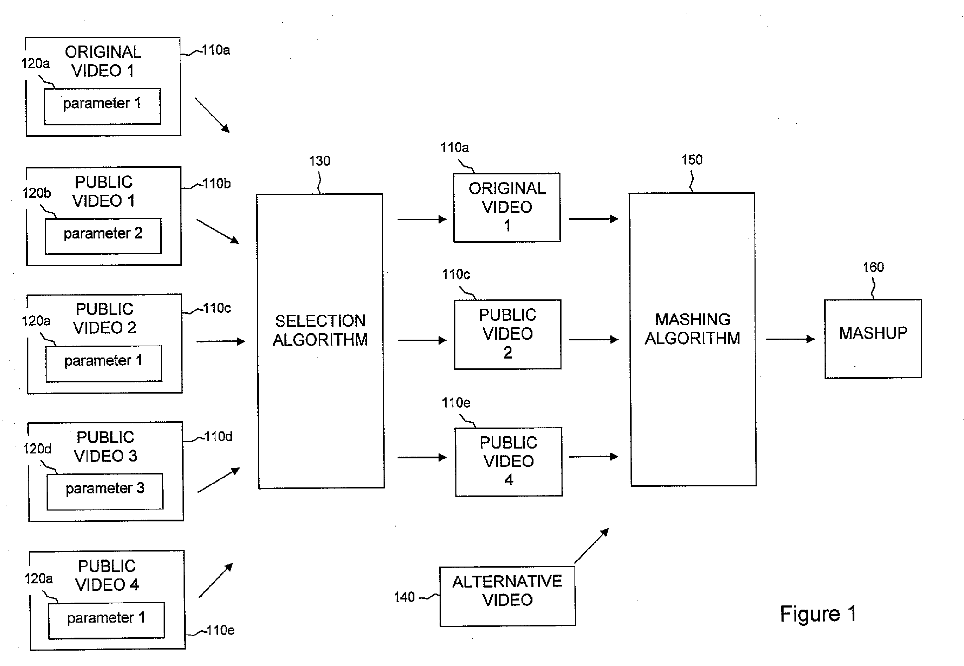

Figure 1 illustrates an implementation of a system that could be used for automated creation of mashups. A plurality of videos 110 are available to a mashup artist for use in creating a mashup. In this example, one of the videos 110 is an original video 110a recorded by the mashup artist or someone associated with the mashup artist, but in other cases more than one original video may be available or no original videos may be available. The mashup artist has identified four public videos 110b - 110e that were potentially recorded at the same event as the original video 110a. In other examples, other numbers of public videos may have been identified. Also, in other examples, the mashup artist may have identified the public videos 110b - 110e as potentially having been recorded at the same event as one another and potentially being of interest in creating a mashup, but the mashup artist may not have recorded an original video at the event.

The mashup artist might then specify one or more selection parameters 120 for the videos 110 such that a determination can be made whether two or more of the videos 110 were recorded at the same event. The parameters 120 might include metadata such as the date and location of the recordings and/or soundtrack-related information for the recordings and/or other information. The specification of the parameters 120 might be made with the assistance of a selection algorithm 130.

When the parameters 120 that are to be used in finding videos 110 that were recorded at the same event have been specified, the selection algorithm 130 can evaluate the parameters 120 to determine if there are any commonalities in the parameters 120. In this example, the selection algorithm 130 has determined that video 110a, video 110c, and video 110e all have a parameter 120a in common. For example, parameter 120a might be the soundtracks of video 110a, video 110c, and video 110e, and the selection algorithm 130 might determine that video 110a, video 110c, and video 110e all have a very similar soundtrack. The selection algorithm 130 might then select video 110a, video 110c, and video 110e as being suitable for use in creating a mashup.

Alternatively, the selection algorithm 130 might be configured such that a match between a plurality of parameters 120 is needed before a determination can be made that two or more of the videos 110 were recorded at the same event. For example, similarities might need to be found between the time of the recordings as well as the location of the recordings as well as the soundtracks of the recordings in order for a conclusion to be reached that multiple videos 110 were recorded at the same event. In an implementation, the selection algorithm 130 might include a capability to rank or weight a plurality of parameters 120 and derive a value for the probability that two or more of the videos 110 were recorded at the same event. The selection algorithm 130 might then select only those videos 110 with a probability ranking greater than a predefined value.

After the selection algorithm 130 has selected two or more videos 110 that are likely to have been recorded at the same event, the mashup artist can use the selected videos in creating a mashup. The mashup artist may also choose to include one or more alternative videos in the mashup. In this example, a single alternative video 140 has been chosen. At this point, the mashup artist can assign one or more mashing parameters to the selected videos 110a, 110c, and 110e and/or to the alternative video 140. The mashing parameters might be the same as the selection parameters 120 or may be different or additional parameters. The mashing parameters specify how the videos that are to be used in the mashup are to be spliced together. For example, the mashup artist may specify that various characteristics of the soundtracks of the videos are to be used in determining when a scene in the mashup should switch from a scene derived from one of the videos to a scene derived from another of the videos.

Using the selected videos 110a, 110c, and 110e, the alternative video 140, and the specified mashing parameters, a mashing algorithm 150 then automatically creates a mashup 160. The mashing algorithm 150 uses the soundtrack of at least one of the videos to ensure that scenes from the videos are displayed in the proper sequence in the mashup 160. The mashup artist might then judge the artistic merit of the mashup 160 and can either accept the mashup 160 or adjust one or more of the mashing parameters and create another mashup. Alternatively, the mashup artist may instruct the mashing algorithm 150 to generate the mashup 160 with only minimal input. The mashup artist might then judge the artistic merit of the mashup 160 produced in this manner and can choose to accept the mashup 160 or can instruct the mashing algorithm 150 to produce another mashup with only minimal input.

Although the selection algorithm 130 and the mashing algorithm 150 are depicted in this example as separate components, it should be understood that the selection algorithm 130 and the mashing algorithm 150 might be a single component or might be elements within a single component.

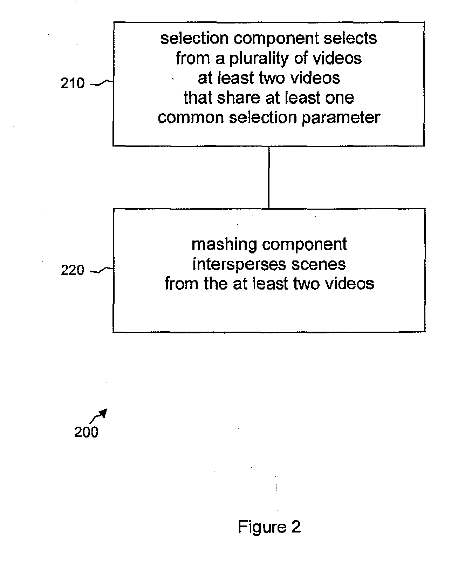

Figure 2 illustrates an implementation of a method 200 for creating a video compilation. At block 210, a selection component selects from a plurality of videos at least two videos that share at least one common selection parameter. At block 220, a mashing component intersperses scenes from the at least two videos.

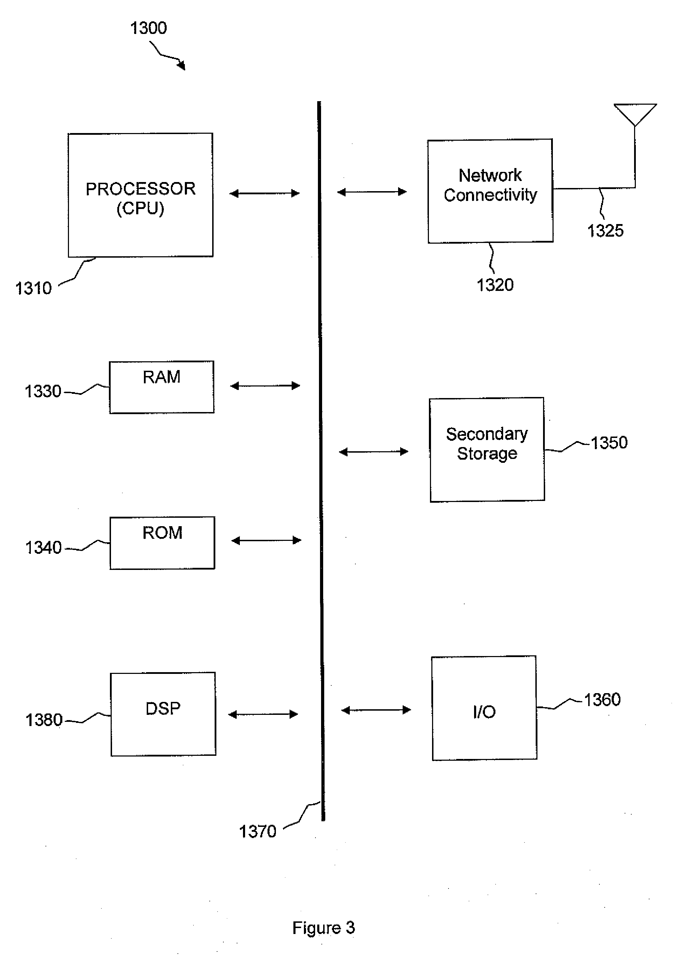

The components described above might be implemented on a device that includes a processing component that is capable of executing instructions related to the actions described above. Figure 3 illustrates an example of a system 1300 that includes a processing component 1310 suitable for one or more of the implementations disclosed herein. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information.

The network connectivity devices 1320 might also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 might include separate receiving and transmitting units or a single transceiver. Information transmitted or received by the transceiver component 1325 may include data that has been processed by the processor 1310 or instructions that are to be executed by processor 1310. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the I/O devices 1360 instead of or in addition to being a component of the network connectivity devices 1320.

In an implementation, a method is provided for creating a video compilation. The method comprises a selection component selecting from a plurality of videos at least two videos that share at least one common selection parameter, and a mashing component interspersing scenes from the at least two videos. In some cases, the selection component might evaluate a plurality of selection parameters and select the at least two videos when the evaluation of the plurality of selection parameters indicates that the probability that the at least two videos were recorded at the same event exceeds a predefined value. Also, a video that does not share one of the common selection parameters with the at least two videos might be interspersed with the at least two videos. In addition, the mashing component might be capable of recognizing in one of the at least two videos a still image related to a moving image in the one of the at least two videos and might be further capable of refraining from including in the video compilation a scene that includes the still image.

In another implementation, a system is provided for creating a video compilation. The system comprises a selection component configured to select from a plurality of videos at least two videos that share at least one common selection parameter, and a mashing component configured to intersperse scenes from the at least two videos. In some cases, the selection component might evaluate a plurality of selection parameters and select the at least two videos when the evaluation of the plurality of selection parameters indicates that the probability that the at least two videos were recorded at the same event exceeds a predefined value. Also, a video that does not share one of the common selection parameters with the at least two videos might be interspersed with the at least two videos. In addition, the mashing component might be capable of recognizing in one of the at least two videos a still image related to a moving image in the one of the at least two videos and might be further capable of refraining from including in the video compilation a scene that includes the still image.

While several implementations have been provided in the present disclosure, it should be understood that the disclosed systems and methods may be implemented in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method for creating a video compilation, comprising:
a selection component selecting from a plurality of videos at least two videos that
share at least one common selection parameter; and
a mashing component interspersing scenes from the at least two videos.

2. The method of claim 1, wherein the at least one common selection parameter is at least one of:
a time when the at least two videos were recorded;
a location where the at least two videos were recorded; and
a similarity in the soundtracks of the at least two videos.

3. The method of claim 1, wherein the interspersed scenes are synchronized based on a soundtrack of at least one of the at least two videos.

4. The method of claim 3, wherein a change from a first interspersed scene to a second interspersed scene occurs when a change occurs in the soundtrack.

5. The method of claim 4, wherein the change in the soundtrack is at least one of:
a change in the tempo of music in the soundtrack;
a change in the loudness of the soundtrack;
a change in a musical tone in the soundtrack;
a change in a featured singer in the soundtrack; and
a change in a featured musical instrument in the soundtrack.

6. The method of claim 1, wherein the selection component is capable of accepting human input regarding the at least one common selection parameter, and wherein the selection component selects the at least two videos using one of:
human input with no automated selection;
automated selection with no human input;
a combination of human input and automated selection.

7. The method of claim 1, wherein the mashing component is capable of accepting human input regarding how the scenes are interspersed, and wherein the mashing component intersperses the scenes using one of:
human input with no automated selection;
automated selection with no human input;
a combination of human input and automated selection.

8. A system for creating a video compilation, comprising:
a selection component configured to select from a plurality of videos at least two
videos that share at least one common selection parameter; and
a mashing component configured to intersperse scenes from the at least two
videos.

9. The system of claim 8, wherein the at least one common selection parameter is at least one of:
a time when the at least two videos were recorded;
a location where the at least two videos were recorded; and
a similarity in the soundtracks of the at least two videos.

10. The system of claim 8, wherein the interspersed scenes are synchronized based on a soundtrack of at least one of the at least two videos.

11. The system of claim 10, wherein a change from a first interspersed scene to a second interspersed scene occurs when a change occurs in the soundtrack.

12. The system of claim 11, wherein the change in the soundtrack is at least one of:
a change in the tempo of music in the soundtrack;
a change in the loudness of the soundtrack;
a change in a musical tone in the soundtrack;
a change in a featured singer in the soundtrack; and
a change in a featured musical instrument in the soundtrack.

13. The system of claim 8, wherein the selection component is capable of accepting human input regarding the at least one common selection parameter, and wherein the selection component selects the at least two videos using one of:
human input with no automated selection;
automated selection with no human input;
a combination of human input and automated selection.

14. The system of claim 8, wherein the mashing component is capable of accepting human input regarding how the scenes are interspersed, and wherein the mashing component intersperses the scenes using one of:
human input with no automated selection;
automated selection with no human input;
a combination of human input and automated selection.

15. A computer-readable medium containing instructions that, when executed by a processor, perform any of the steps of claims 1 through 7.
